# EUROPÄISCHE PATENTSCHRIFT

(11) **EP 3 520 213 B1**
(45) Veröffentlichungstag und Bekanntmachung des Hinweises auf die Patenterteilung: **01.04.2020**
(21) Anmeldenummer: 17783785.3
(22) Anmeldetag: 29.09.2017
(51) Int. Cl.: H02M 7/49, H02M 7/493, H02M 7/5387, H02M 7/5395

(54) **VERFAHREN ZUM BETREIBEN EINES WECHSELRICHTERS UND WECHSELRICHTER**
METHOD FOR OPERATING AN INVERTER AND INVERTER
PROCÉDÉ DESTINÉ AU FONCTIONNEMENT D'UN ONDULEUR ET ONDULEUR

(30) Priorität: 30.09.2016 EP 16191753
(43) Veröffentlichungstag der Anmeldung: 07.08.2019
(73) Patentinhaber: Fronius International GmbH, 4643 Pettenbach (AT)
(72) Erfinder: STARZINGER, Johannes, 4643 Pettenbach (AT); NAGELMÜLLER, Martin, 4643 Pettenbach (AT)
(74) Vertreter: Sonn & Partner Patentanwälte
(86) Internationale Anmeldenummer: PCT/EP2017/074760
(87) Internationale Veröffentlichungsnummer: WO 2018/060414

(56) Entgegenhaltungen:
- EP-A2- 2 887 519
- DE-A1-102007 046 511
- JP-A- 2009 165 279

## Beschreibung

Die Erfindung betrifft ein Verfahren zum Betreiben eines Wechselrichters zur Umwandlung einer Gleichspannung in eine Wechselspannung mit einer vorgegebenen Netzfrequenz zur Versorgung von Verbrauchern und/oder Einspeisung in ein Versorgungsnetz, wobei die Gleichspannung über einen Gleichspannungseingang mehreren parallel geschalteten AC-Leistungsteilen mit Halbleiterschaltern in Brückenschaltung und parallel dazu angeordneten Freilaufdioden zugeführt wird, und die Teil-Ausgangsströme der einzelnen AC-Leistungsteile über jeweils eine Induktivität einem Wechselspannungsausgang als Ausgangswechselstrom zugeführt werden.

Weiters betrifft die Erfindung einen Wechselrichter zur Umwandlung einer Gleichspannung in eine Wechselspannung mit einer vorgegebenen Netzfrequenz zur Versorgung von Verbrauchern und/oder Einspeisung in ein Versorgungsnetz, mit einem Gleichspannungseingang und mehreren parallel geschalteten AC-Leistungsteilen mit Halbleiterschaltern in Brückenschaltung und parallelen dazu angeordneten Freilaufdioden, wobei die Ausgänge der AC-Leistungsteile über jeweils eine Induktivität mit einem Wechselspannungsausgang verbunden sind, und die Teil-Ausgangsströme der einzelnen AC-Leistungsteile über die jeweilige Induktivität dem Wechselspannungsausgang in Form eines Ausgangswechselstromes zugeführt werden.

Die WO 2009/003959 A2 zeigt ein Wechselrichtersystem bei dem parallele, als Wechselrichter ausgeführte, AC-Leistungsteile an einem gemeinsamen Gleichspannungseingang oder Gleichspannungszwischenkreis betrieben werden. Dabei sind die Wechselrichter mit Halbleiterschaltern in Brückenschaltung aufgebaut und einige mögliche Ausführungsbeispiele für Halbbrücken angegeben. Die parallelen AC-Leistungsteile werden über Induktivitäten verbunden und bilden so den Wechselspannungsausgang zur Versorgung von Verbrauchern. Der Stromfluss zum Verbraucher wird über Halbleiterschalter geführt, deren Ansteuerung mittels einer Steuereinrichtung erfolgt. Darin wird die Problematik des Stromflusses zwischen den parallelen AC-Leistungsteilen aufgrund von Impedanzunterschieden und unterschiedlichem Schaltverhalten der AC-Leistungsteile bzw. deren Halbleiterschaltern beschrieben, der auch Quer- oder Kreisstrom genannt wird und Unsymmetrien in der Aufteilung des gesamten Ausgangswechselstroms auf den Teil-Ausgangsstrom der einzelnen, parallelen AC-Leistungsteile verursacht. Dies kann in weiterer Folge erhöhte thermische Verluste in den AC-Leistungsteilen, eine Überlastung der Halbleiterschalter sowie eine Blindleistungsaufnahme des Gesamtsystems verursachen. Die WO 2009/003959 A2 bzw. deren Stand der Technik beschreiben Verfahren, um diese unerwünschten Effekte aufgrund der Kreisströme zu vermeiden bzw. den Ausgangswechselstrom zu symmetrieren, d.h. eine symmetrische Stromaufteilung des Ausgangswechselstroms auf die einzelnen parallelen AC-Leistungsteile zu erreichen. All diesen Verfahren ist jedoch gemeinsam, dass zur Reduzierung der Kreisströme die Unsymmetrie der Ausgangswechselstromaufteilung mit relativ hohem Aufwand erfasst werden muss und eine zusätzliche übergeordnete Regelung benötigt wird.

Die EP 2 887 519 A2 beschreibt eine Energieversorgung für Flugzeuge mit mehreren parallelen Leistungsteilen, wobei zur Reduktion hochfrequenter Kreisströme Induktivitäten zur Begrenzung der Kreisströme eingesetzt werden. Zur Reduktion niederfrequenter Kreisströme wird zusätzlich eine Regelung vorgeschlagen, welche einen zusätzlichen Schaltungsaufwand erfordert.

Aus der DE 10 2007 046 511 A1 ist ein Gleichrichter mit mehreren Parallelkreisen zur Anwendung bei der Antriebstechnik bekannt geworden, welcher zur Vermeidung von Kreisströmen innerhalb eines Parallelkreises einen Schalter zur kurzzeitigen Unterbrechung des Parallelkreises aufweist. Zwischen den Parallelkreisen auftretende Kreisströme und Unsymmetrien können dadurch nicht reduziert werden.

Schließlich beschreibt die JP 2009 165279 A ein Verfahren zur Totzeitkompensation bei Wechselrichtern.

Die Aufgabe der vorliegenden Erfindung besteht darin, ein oben genanntes Verfahren und einen Wechselrichter zu schaffen, bei welchen trotz paralleler AC-Leistungsteile Unsymmetrien möglichst vermieden werden und auf eine Regelung zur Reduktion der Kreisströme verzichtet werden kann. Zusätzliche Komponenten zur Reduktion der Kreisströme sollen möglichst vermieden werden.

Diese Aufgabe wird durch die Merkmale der Ansprüche 1 und 7 gelöst. Vorteilhafte Ausgestaltungen sind Gegenstand der auf diese rückbezogenen Unteransprüche.

In einer bevorzugten Ausgestaltung der Erfindung wird ein Verfahren zum Betreiben eines Wechselrichters beschrieben, bei dem die Halbleiterschalter der parallel geschalteten AC-Leistungsteile des Wechselrichters über eine gemeinsame Steuereinrichtung synchron mit einer Schaltfrequenz angesteuert werden, und die Halbleiterschalter der AC-Leistungsteile bei einzelnen Nulldurchgängen des Ausgangswechselstromes über eine vorgegebene Zeitspanne gesperrt werden, sodass die Induktivitäten über die Freilaufdioden der Halbleiterschalter entladen und dadurch die Teil-Ausgangsströme der parallelen AC-Leistungsteile auf Null abklingen und symmetriert werden. Bei den einzelnen Nulldurchgängen des Ausgangswechselstromes wären bei symmetrischer Verteilung des Ausgangswechselstroms die einzelnen Teil-Ausgangsströme der parallelen AC-Leistungsteile gleichfalls im Bereich des Nulldurchgangs. Eventuell vorhandene Teil-Ausgangsströme der einzelnen AC-Leistungsteile sind daher durch Unsymmetrien bzw. Kreisströme verursacht und können bei gesperrten Halbleiterschalter der AC-Leistungsteile über die Freilaufdioden der Halbleiterschalter abklingen. Aufgrund der in den Induktivitäten gespeicherten Energie benötigen die Kreisströme aber eine bestimmte Zeit zum Abklingen. Abhängig von der Größe der Unsymmetrie können während der vorgegebenen Zeitspanne, in der die Halbleiterschalter gesperrt sind, die Teil-Ausgangsströme auf Null abklingen oder zumindest reduziert werden. Unsymmetrien in der Stromaufteilung auf die parallelen AC-Leistungsteile, die sich über einen längeren Zeitraum aufbauen, können so wirkungsvoll verhindert werden. Indem die Halbleiterschalter der AC-Leistungsteile bei einzelnen Nulldurchgängen des Ausgangswechselstromes über eine vorgegebene Zeitspanne gesperrt werden, kann der in den Teil-Ausgangsströmen der parallelen AC-Leistungsteile auftretende Kreisstrom reduziert und somit eine symmetrische Stromaufteilung des Ausgangswechselstromes auf die einzelnen Teil-Ausgangsströme der parallelen AC-Leistungsteile erzielt werden. Eventuell bei der Bereitstellung des Ausgangswechselstroms entstandene Unsymmetrien in der Stromaufteilung auf die einzelnen AC-Leistungsteile können so zurückgesetzt werden. Durch das Sperren der Halbleiterschalter der AC-Leistungsteile bei einzelnen Nulldurchgängen des Ausgangswechselstromes, kann der in den Teil-Ausgangsströmen der parallelen AC-Leistungsteile auftretende Kreisstrom reduziert werden, indem die Teil-Ausgangsströme über die Freilaufdioden abklingen und nach Beendigung der Symmetrierung bzw. mit wieder beginnender Ansteuerung der Halbleiterschalter, kann sich der Ausgangswechselstrom gleichmäßig auf die einzelnen Teil-Ausgangsströme der parallelen AC-Leistungsteile aufteilen. Dies kann das Betreiben mehrerer paralleler AC-Leistungsteile erlauben, wobei auf eine übergeordnete, zusätzliche Regelung zur Reduktion der Kreisströme verzichtet werden kann. Zudem werden bei dem erfindungsgemäßen Verfahren keine zusätzlichen Komponenten oder Bauteile benötigt.

Als Brückenschaltung der AC-Leistungsteile können sowohl Halbbrücken als auch Vollbrücken in unterschiedlichen Ausführungsformen, wie beispielsweise 2-Punkt oder 3-Punkt Brücken, zum Einsatz kommen.

Durch besondere Einfachheit zeichnet sich das Verfahren aus, da die funktionsgleichen Halbleiterschalter der parallel geschalteten AC-Leistungsteile von der gemeinsamen Steuereinrichtung synchron angesteuert werden. Dies erlaubt die Verwendung einer einzigen Steuereinrichtung für alle parallelen AC-Leistungsteile. Beispielsweise kann eine einzige Steuerleitung für mehrere Halbleiterschalter eingesetzt werden. Das Gesamtsystem der parallelen AC-Leistungsteile kann dadurch einfach und kostengünstig aufgebaut werden.

Werden die Halbleiterschalter der AC-Leistungsteile während jedes n-ten Nulldurchgangs des Ausgangswechselstromes über die vorgegebene Zeitspanne gesperrt, wobei n eine ungerade ganzzahlige Zahl, insbesondere eine Primzahl, kleiner 500 ist, können die durch die Unterbrechung des Stromflusses hervorgerufenen Störungen in der Ausgangswechselspannung reduziert werden. Gerade bei der Verwendung eines ungeraden Intervalls von Nulldurchgängen für die Anwendung des Verfahrens, können sich im Mittel die Auswirkungen der durch das Verfahren verursachten Stromunterbrechung bei positiver und negativer Halbwelle aufheben. Zusätzlich kann durch die Verwendung einer Primzahl als Intervall der Symmetrierung eine breitere Aufteilung der Störungen auf das Spektrum erreicht werden, was den Einfluss der Störungen auf die Qualität der Wechselspannung am Ausgang des Wechselrichters reduzieren kann.

Ein vorteilhaftes Intervall für die Anwendung des Verfahrens kann ermittelt werden, wenn der Ausgangswechselstrom erfasst wird und n in Abhängigkeit des Ausgangswechselstromes variiert wird. Da die Unsymmetrie der Teil-Ausgangsströme zu einem gewissen Teil von der Höhe des Ausgangswechselstromes beeinflusst wird, kann der Ausgangswechselstrom zur Bestimmung des Intervalls der Symmetrierung, also der Sperrung der Halbleiterschalter, verwendet werden. Zur Bestimmung der Höhe des Ausgangswechselstromes kann dessen Effektiv- oder aber auch dessen Maximalwert herangezogen werden.

Weiter verbessert werden kann das Verfahren, wenn der Teil-Ausgangsstrom jedes AC-Leistungsteils und der Ausgangswechselstrom erfasst wird und bei Überschreiten eines definierten Teil-Ausgangsstroms eines der parallelen AC-Leistungsteile beim Nulldurchgang des Ausgangswechselstroms die Halbleiterschalter der parallelen AC-Leistungsteile über die vorgegebene Zeitspanne gesperrt werden. Die maximale Höhe der einzelnen Teil-Ausgangsströme der parallelen AC-Leistungsteile beim Nulldurchgang des Ausgangswechselstroms, kann als Maß für die aktuelle Unsymmetrie verwendet werden, da bei perfekter Symmetrie alle Teil-Ausgangsströme beim Nulldurchgang des Ausgangswechselstroms Null wären. Dementsprechend kann abhängig von der maximalen Höhe der einzelnen Teil-Ausgangsströme der parallelen AC-Leistungsteile beim Nulldurchgang des Ausgangswechselstroms die Notwendigkeit einer Symmetrierung ermittelt werden und diese anschließend bzw. eventuell auch erst beim nächsten Nulldurchgang des Ausgangswechselstroms durchgeführt werden.

Natürlich ist es nicht unbedingt erforderlich, die Teil-Ausgangsströme jedes AC-Leistungsteils und den Ausgangswechselstrom zu erfassen, da sich entsprechend der Knotenregel des 1. Kirchhoffschen Gesetzes einer der Ströme, bei Messung aller restlichen Ströme, auch berechnen lässt.

In einer weiteren möglichen Variante des Verfahrens wird der Teil-Ausgangsstrom jedes AC-Leistungsteils und der Ausgangswechselstrom erfasst und die vorgegebene Zeitspanne abhängig vom größten Teil-Ausgangsstrom der parallelen AC-Leistungsteile beim Nulldurchgang des Ausgangswechselstroms gewählt. Dabei kann die Symmetrierungsdauer mittels der vorgegebenen Zeitspanne so gewählt werden, dass gegen Ende der Symmetrierung die einzelnen Teil-Ausgangsströme der parallelen AC-Leistungsteile Null sind. Genauso ist vorstellbar die vorgegebene Zeitspanne dynamisch anzupassen, sodass die Symmetrierung mit dem Unterschreiten einer definierten, maximalen Höhe der einzelnen Teil-Ausgangsströme der parallelen AC-Leistungsteile endet. Bei diesem Verfahren wird statt bzw. zusätzlich zur Symmetrierungshäufigkeit auch die Symmetrierungsdauer variiert. Dies kann eventuell kürzere Symmetrierungen und damit geringere Störungen im Signalverlauf der Ausgangswechselspannung bewirken.

Wird die vorgegebene Zeitspanne innerhalb vorgegebener Grenzen vorzugsweise stochastisch variiert, können die Störungen im Frequenzspektrum der Ausgangswechselspannung weiter reduziert werden.

Eine einfach zu realisierende Variante des Verfahrens ergibt sich, wenn die vorgegebene Zeitspanne als eine Periode der Schaltfrequenz gewählt wird. Die vorgegebene Zeitspanne kann so im Bereich von einigen wenigen Mikrosekunden bis mehren 100 Mikrosekunden, vorzugsweise zwischen 5 und 100 Mikrosekunden, liegen.

Eine weitere bevorzugte Ausgestaltung der Erfindung beschreibt einen Wechselrichter, bei welchem eine gemeinsame Steuereinrichtung zur synchronen Steuerung der Halbleiterschalter der parallel geschalteten AC-Leistungsteile mit einer Schaltfrequenz vorgesehen ist, welche Steuereinrichtung dazu ausgebildet ist, die Halbleiterschalter der AC-Leistungsteile während einzelner Nulldurchgänge des Ausgangswechselstromes über eine vorgegebene Zeitspanne zu sperren, sodass die Induktivitäten über die Freilaufdioden der Halbleiterschalter entladbar und dadurch die Teil-Ausgangsströme der parallelen AC-Leistungsteile auf Null abklingbar und symmetrierbar sind. Zu den damit erzielbaren Vorteilen wird auf die obige Beschreibung des Verfahrens verwiesen.

Die Steuereinrichtung kann dazu ausgebildet sein, die Halbleiterschalter der parallelen AC-Leistungsteile während jedes n-ten Nulldurchgangs des Ausgangswechselstromes über die vorgegebene Zeitspanne zu sperren, wobei n eine ungerade ganzzahlige Zahl, insbesondere eine Primzahl, kleiner 500 ist.

Am Wechselspannungsausgang kann ein Sensor zur Messung des Ausgangswechselstromes angeordnet und mit der Steuereinrichtung verbunden sein, sodass die Steuerung der Halbleiterschalter in Abhängigkeit des Ausgangswechselstromes erfolgen kann.

An jedem AC-Leistungsteil kann ein Sensor zur Messung des Teil-Ausgangsstromes des AC-Leistungsteils angeordnet und mit der Steuereinrichtung verbunden sein.

Die Steuereinrichtung kann zur vorzugsweise stochastischen Variation der vorgegebenen Zeitspanne innerhalb vorgegebener Grenzen ausgebildet sein.

In einer einfachen Ausführungsform kann die vorgegebene Zeitspanne eine Periode der Schaltfrequenz betragen.

Die AC-Leistungsteile können durch Halbbrücken mit jeweils zumindest zwei Halbleiterschaltern, vorzugsweise IGBTs mit integrierten Freilaufdioden, gebildet sein.

In einer anderen Ausführungsform können die AC-Leistungsteile durch Vollbrücken mit jeweils zumindest vier Halbleiterschaltern, vorzugsweise IGBTs mit integrierten Freilaufdioden, gebildet sein.

Die Steuereinrichtung kann einen Pulsweitenmodulator zur Ansteuerung der Halbleiterschalter aufweisen.

Die Erfindung wird anhand der beigefügten Zeichnungen näher erläutert. Darin zeigen:
- Fig. 1: eine schematische Übersichtsdarstellung eines Wechselrichters mit mehreren parallelen AC-Leistungsteilen;
- Fig. 2: eine mögliche Ausführungsform des erfindungsgemäßen Wechselrichters mit mehreren parallelen AC-Leistungsteilen;
- Fig. 3: den zeitlichen Verlauf des Ausgangswechselstroms und der Teil-Ausgangsströme der AC-Leistungsteile ohne Verwendung des erfindungsgemäßen Verfahrens;
- Fig. 4: den zeitlichen Verlauf des Ausgangswechselstroms und der Teil-Ausgangsströme der AC-Leistungsteile bei Anwendung des erfindungsgemäßen Verfahrens;
- Fig. 5: den zeitlichen Verlauf der Anwendung des erfindungsgemäßen Verfahrens bei unterschiedlichem Ausgangswechselstrom;
- Fig. 6: den zeitlichen Verlauf des Ausgangswechselstroms und der Teil-Ausgangsströme der AC-Leistungsteile bei Verwendung eines Schwellwerts für den Teil-Ausgangsstrom zur Anwendung des erfindungsgemäßen Verfahrens;
- Fig. 7: die Anwendung des erfindungsgemäßen Verfahrens bei dem die vorgegebene Zeitspanne abhängig von der Größe des Teil-Ausgangsstroms beim Nulldurchgang des Ausgangswechselstroms gewählt wird; und
- Fig. 8: das erfindungsgemäße Verfahren mit stochastischer Variation der vorgegebenen Zeitspanne.

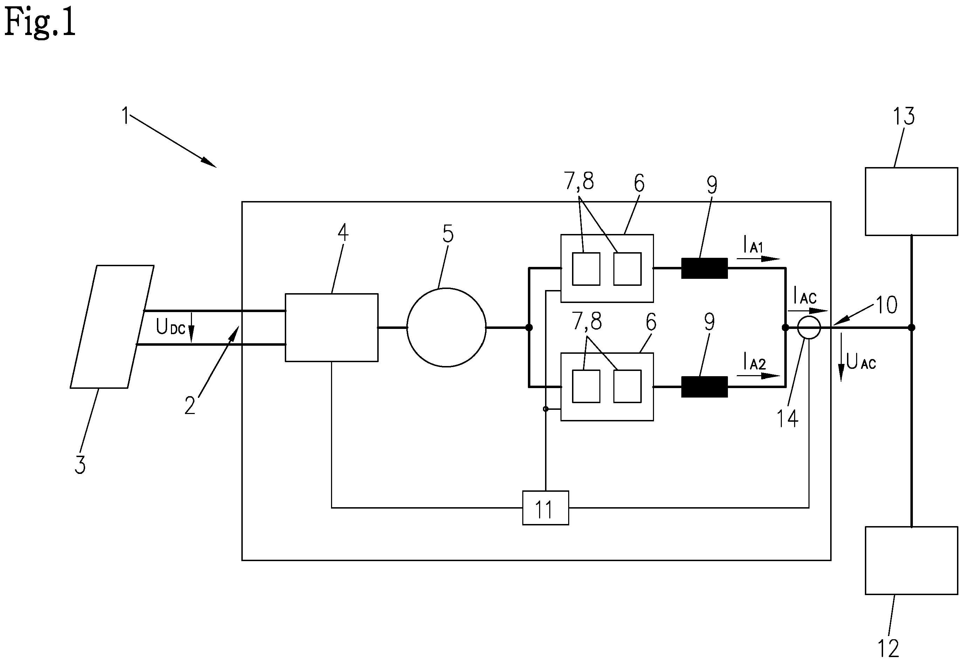

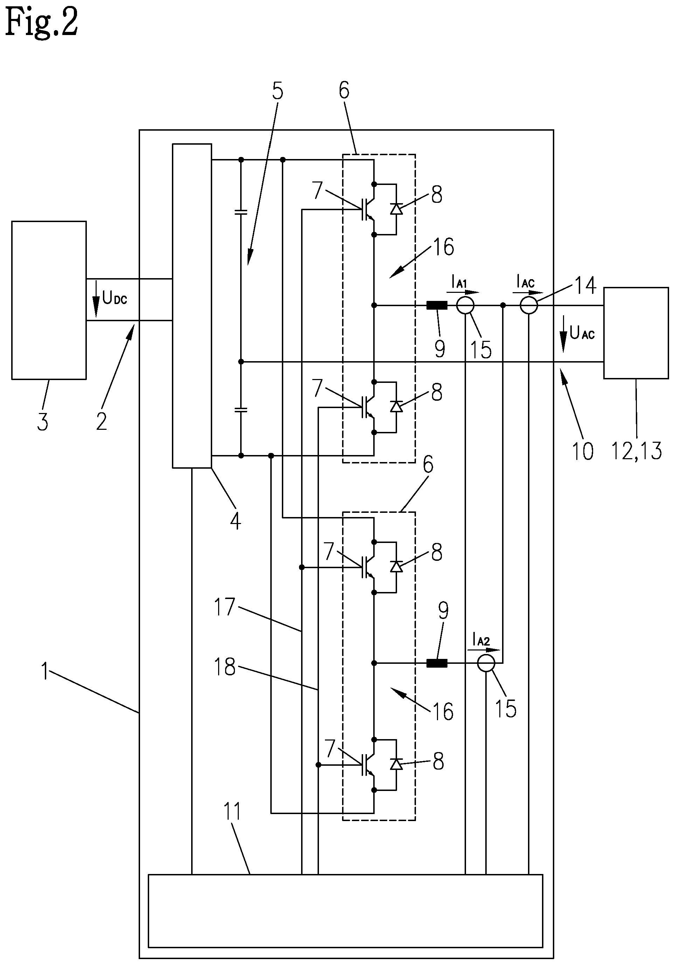

Fig. 1 zeigt eine schematische Übersichtsdarstellung eines Wechselrichters 1, wie er beispielsweise für Photovoltaikanlagen verwendet wird. Der Wechselrichter 1 wird an seinem Gleichspannungseingang 2 mit einer entsprechenden Gleichspannungsquelle 3, beispielsweise einer Batterie oder Photovoltaikmodulen, verbunden. Ein nicht näher beschriebener Eingangs-DC-Wandler 4 kann optional vor dem Zwischenkreis 5 angeordnet sein. Der Zwischenkreis 5 puffert die Gleichspannung U_{DC} für die parallel geschalteten AC-Leistungsteile 6. In diesem Ausführungsbeispiel sind zwei parallele AC-Leistungsteile 6 dargestellt, dennoch ist das erfindungsgemäße Verfahren für eine beliebige Anzahl von parallelen AC-Leistungsteilen 6 anwendbar. Die AC-Leistungsteile 6 sind dabei mit Halbleiterschaltern 7 in Brückenschaltung und parallel dazu angeordneten Freilaufdioden 8 aufgebaut (siehe Fig. 2). Mit einer gemeinsamen Steuereinrichtung 11 des Wechselrichters 1, welche vorzugsweise durch einen Mikroprozessor, Mikrocontroller oder Rechner gebildet wird, werden die AC-Leistungsteile 6 bzw. deren Halbleiterschalter 7 mit einer Schaltfrequenz f_{S} angesteuert. Dazu können zur Ansteuerung für die einzelnen Halbleiterschalter 7 nicht näher dargestellte Treiberstufen, beispielsweise Gatetreiber, vorgesehen sein. Dabei werden beispielsweise mit Hilfe einer Pulsweitenmodulation die AC-Leistungsteile 6 so angesteuert, dass der gewünschte Ausgangswechselstrom I_{AC} als Summe der einzelnen Teil- Ausgangsströme I_{A1} + I_{A2} erzeugt wird. Zudem können mit der Steuereinrichtung 11 nicht näher dargestellte Bedienungselemente und Schnittstellen verbunden sein, über welche eine Bedienung des Wechselrichters 1 oder die Durchführung eines Software-Updates der Steuereinrichtung 11 vorgenommen werden kann. Die Teil-Ausgangsströme I_{A1}, I_{A2} der einzelnen AC-Leistungsteile 6 werden über jeweils eine Induktivität 9 einem Wechselspannungsausgang 10 zugeführt. Die Induktivität 9 kann dabei durch eine Ausgangsdrossel oder auch durch die Leitungsinduktivitäten der Verbindungsleitungen realisiert sein. Der über den Wechselspannungsausgang 10 geführte Ausgangswechselstrom I_{AC} weist eine vorgegebene Netzfrequenz f_{AC} auf und wird zur Versorgung von Verbrauchern 12 und bzw. oder zur Einspeisung in ein Versorgungsnetz 13 mit der Wechselspannung U_{AC} genutzt.

Fig. 2 zeigt eine mögliche Ausführungsform eines Wechselrichters 1, bei der die einzelnen Halbleiterschalter 7 inklusive der parallel geschalteten Freilaufdioden 8 der AC-Leistungsteile 6 ersichtlich sind. Die Halbleiterschalter 7 werden mit der Schaltfrequenz f_{S} von der Steuereinrichtung 11 angesteuert. Dabei weisen die AC-Leistungsteile 6 2-Punkt Halbbrücken 16 auf, die über Induktivitäten 9 parallel geschaltet sind. Im Betrieb ist üblicherweise immer einer der beiden Halbleiterschalter 7 einer Halbbrücke 16 leitend, sodass der Wechselspannungsausgang 10 entweder mit dem positiven oder negativen Zwischenkreispotential verbunden ist. In analoger Weise ist selbstverständlich auch die Verwendung einer anderen Brückenschaltungstopologie, beispielsweise einer 3-Punkt Halbbrücke, denkbar.

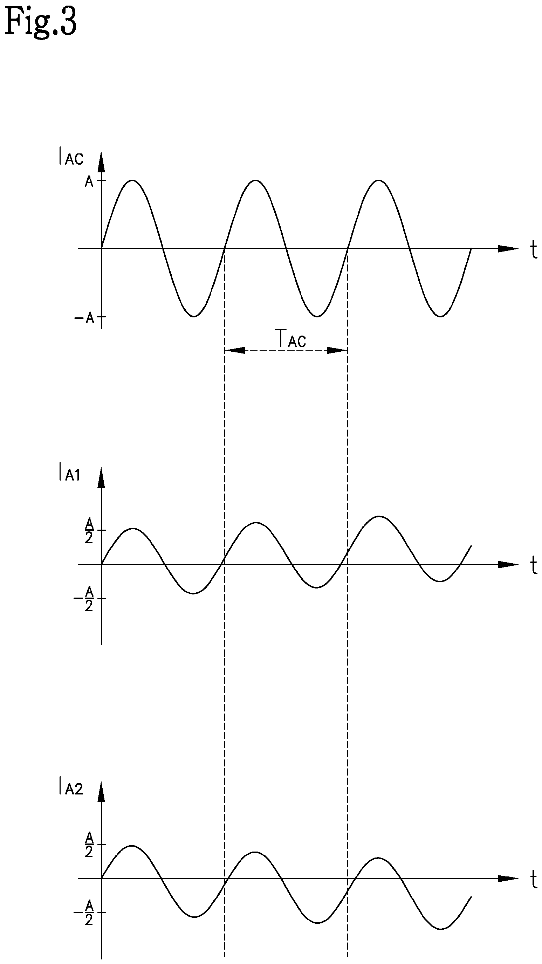

Bei derartigen Wechselrichtern 1 teilt sich der Ausgangswechselstrom I_{AC} aufgrund von Flussspannungsunterschieden, den Durchlasseigenschaften und bzw. oder unterschiedlichen dynamischen Schaltverhalten der AC-Leistungsteile 6 bzw. deren Halbleiterschaltern 7 zwischen den parallelen AC-Leistungsteilen 6 nicht gleichmäßig auf. Vielmehr kann es im Betrieb zu einem Auseinanderdriften der Teil-Ausgangströme I_{A1}, I_{A2} der einzelnen AC-Leistungsteile 6 kommen. Fig. 3 zeigt ein entsprechendes Beispiel des Ausgangswechselstroms I_{AC} und der Teil-Ausgangsströme I_{A1}, I_{A2} bei zwei parallel geschalteten AC-Leistungsteilen 6. Dabei entspricht die Periodendauer T_{AC} dem Kehrwert der vorgegebenen Netzfrequenz f_{AC}. Wie beispielhaft zu sehen ist, steigt der Teil-Ausgangsstrom I_{A1} des ersten AC-Leistungsteils 6 um einen stetig steigenden Gleichstromanteil an während der Teil-Ausgangsstrom I_{A2} des zweiten AC-Leistungsteils 6 um den gleichen Gleichstromanteil sinkt. Die Summe der Teil-Ausgangsströme I_{A1} + I_{A2} der AC-Leistungsteile 6 ergeben den in Amplitude und Frequenz gleichbleibenden Ausgangswechselstrom I_{AC}, der in Figur 3 im obesten Diagramm dargestellt ist.

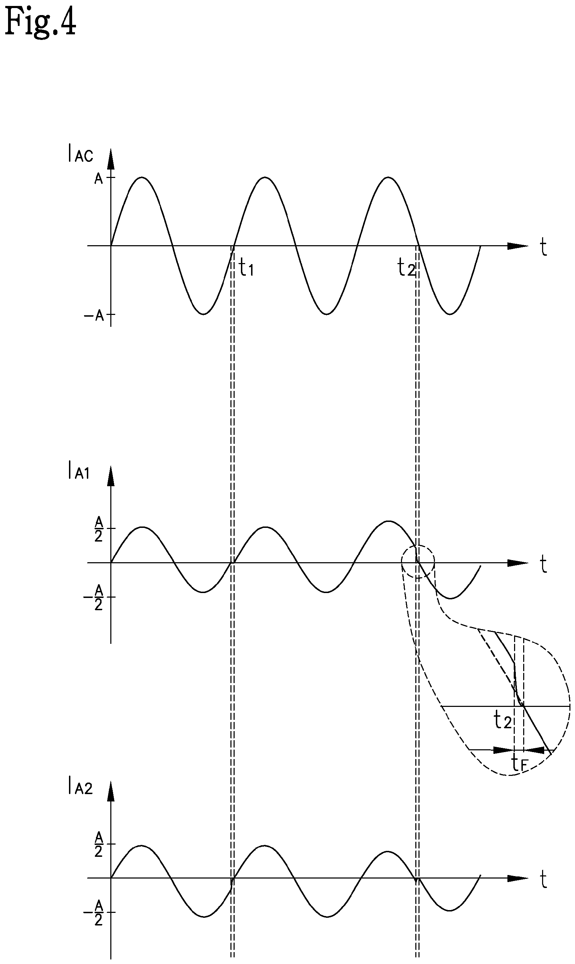

Wie in Fig. 4 gezeigt, werden die Halbleiterschalter 7 der AC-Leistungsteile 6 bei einzelnen Nulldurchgängen des Ausgangswechselstromes I_{AC} über eine vorgegebene Zeitspanne t_{F} zeitgleich gesperrt, um eine symmetrische Stromaufteilung des Ausgangswechselstroms I_{AC} zu erreichen bzw. die Unsymmetrie in der Aufteilung zu reduzieren. In dieser vorgegebenen Zeitspanne t_{F} werden die Induktivitäten 9 über die Freilaufdioden 8 der Halbleiterschalter 7 entladen und dadurch die Teil-Ausgangsströme I_{A1}, I_{A2} der parallelen AC-Leistungsteile 6 symmetriert. Im dargestellten Beispiel gemäß Fig. 4 findet diese Symmetrierung nach zwei Halbwellen zum Zeitpunkt t₁ und nach drei weiteren Halbwellen zum Zeitpunkt t₂ statt. Im vergrößerten Detail-Ausschnitt der Fig. 4 wird der Teil-Ausgangstrom I_{A1} des ersten AC-Leistungsteils 6 um den Zeitpunkt t₂ gezeigt. Dabei ist auch der symmetrisch aufgeteilte Ausgangswechselstrom I_{AC}, in diesem Beispiel der halbe Ausgangswechselstrom I_{AC}, strichliert gezeichnet. Dies entspricht eigentlich dem gewünschten Teil-Ausgangsstrom I_{A1} des AC-Leistungsteils 6. Aufgrund von Unsymmetrien der elektronischen Bauteile sowie des Schaltverhaltens der Halbleiterschalter 7 weisen die Ausgangströme I_{A1}, I_{A2} eine Abweichung vom gewünschten Verlauf auf, wobei sich diese Abweichung üblicherweise über mehrere Halbwellen aufbaut. Daher werden die Halbleiterschalter 7 für die Zeitspanne t_{F} vor dem Nulldurchgang des Ausgangswechselstroms I_{AC} von der Steuereinrichtung 11 zeitgleich gesperrt. Während dieser Zeitspanne t_{F} können die Teil-Ausgangsströme I_{A1}, I_{A2} abhängig von deren aktueller Höhe über die Freilaufdioden 8 auf Null abklingen aber auf jeden Fall werden die Teil-Ausgangsströme I_{A1}, I_{A2} und damit die Unsymmtrie der Stromaufteilung reduziert. Mit dem Ende der Zeitspanne t_{F}, das im gezeigten Beispiel mit dem Nulldurchgang des Ausgangswechselstroms I_{AC} zusammenfällt, werden die Halbleiterschalter 7 wieder angesteuert. Der nach dem Nulldurchgang geforderte Ausgangswechselstrom I_{AC} wird nun, da beide AC-Leistungsteile 6 zuvor stromlos waren, symmetrisch aufgeteilt über die Halbbrücken 16 der AC-Leistungsteile 6 zum Wechselspannungsausgang 10 des Wechselrichters 1 geleitet. Abweichend vom gezeigten Beispiel ist auch denkbar die Zeitspanne t_{F} mit dem Nulldurchgang des Ausgangswechselstroms I_{AC} zu starten oder auch, dass die Zeitspanne t_{F} den Nulldurchgang des Ausgangswechselstroms I_{AC} einschließt. Obwohl hier nur ein einphasiges Beispiel gezeigt wird, ist das Konzept genauso bei dreiphasigen Wechselrichtern mit parallel geschalteten AC-Leistungsteilen 6 anwendbar.

Ein besonders einfacher Aufbau des Wechselrichters 11 wird erreicht, indem die Halbleiterschalter 7 der parallel geschalteten AC-Leistungsteile 6 von der gemeinsamen Steuereinrichtung 11 synchron angesteuert werden. Dabei können die funktionsgleichen Halbleiterschalter 7, wie in Fig. 2 dargestellt, über gemeinsame Leitungen 17, 18 angesteuert werden, aber auch die Ansteuerung mit separaten Steuerleitungen, welche die selben Signale aufweisen, ist vorstellbar.

Aus Fig. 4 ist außerdem ersichtlich, dass der zeitliche Abstand zwischen den Anwendungen des Verfahrens variiert werden kann, d.h. dass das Verfahren nicht nach jeder Halbwelle oder nach jeder Periode durchgeführt werden muss. Vielmehr hat sich herausgestellt, dass bei Anwendung des Verfahrens nach jedem n-ten Nulldurchgangs des Ausgangswechselstromes I_{Ac}, wobei n eine ungerade ganzzahlige Zahl, insbesondere eine Primzahl, kleiner 500 ist, durch die Sperrung der Halbleiterschalter 7 verursachten Störungen im Frequenzspektrum des Ausgangswechselstroms I_{AC} klein gehalten werden. Gerade bei Verwendung eines ungeraden Intervalls von Nulldurchgängen für die Anwendung des Verfahrens, können sich im Mittel die Auswirkungen der Unterbrechung des Ausgangswechselstroms I_{AC} bei positiver und negativer Halbwelle aufheben und es kann ein DC-Offset vermieden werden.

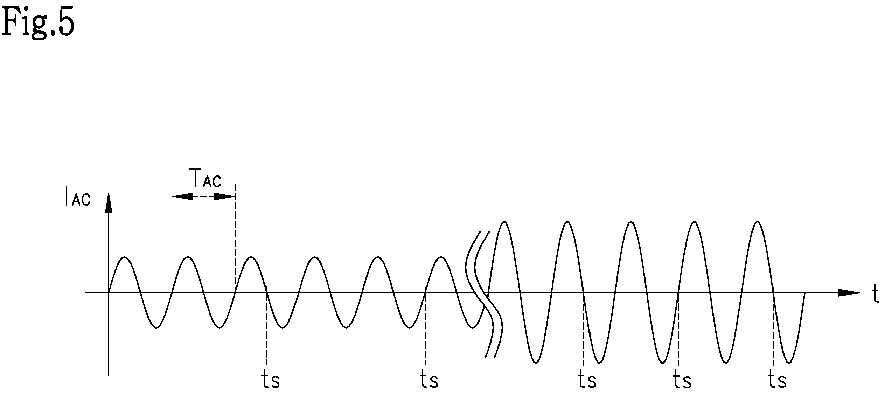

Fig. 5 zeigt wie in Abhängigkeit der Größe des Ausgangswechselstroms I_{AC} das Intervall für die Anwendung des Verfahrens variiert wird. Im ersten Abschnitt, bei kleinerer Amplitude des Ausgangswechselstromes I_{AC} wird das Symmetrie-Verfahren jede fünfte Halbwelle zu den Zeitpunkten t_{S} angewendet, während im zweiten Abschnitt bei höherer Amplitude des Ausgangswechselstromes I_{AC} das Verfahren jede dritte Halbwelle zu den Zeitpunkten t_{S} angewendet wird. Die Häufigkeit der Anwendung des Verfahrens wird so an die jeweiligen Erfordernisse angepasst.

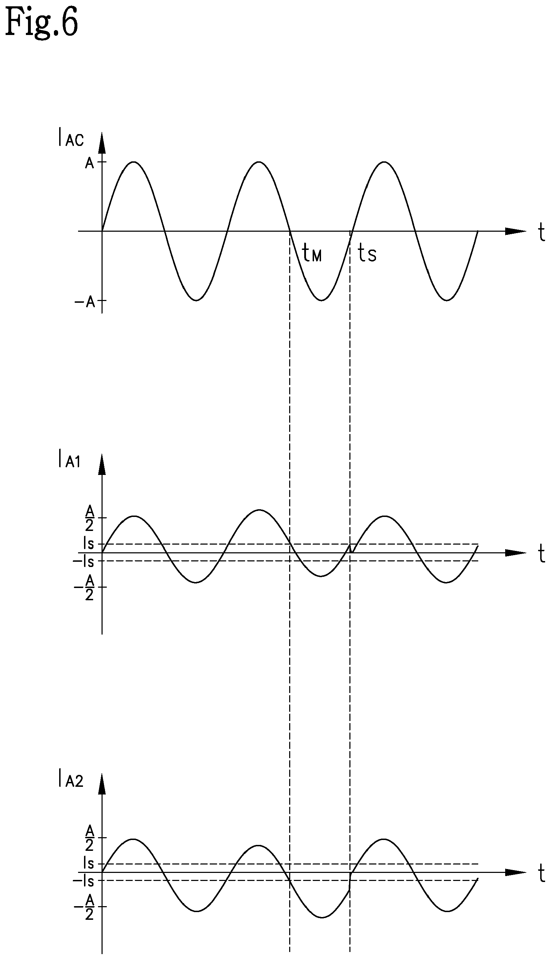

Die Teil-Ausgangsströme I_{A1}, I_{A2} jedes AC-Leistungsteils 6 und der Ausgangswechselstrom I_{AC} können mit Hilfe von Sensoren 14, 15 oder vergleichbaren Einrichtungen zur Strommessung, wie beispielsweise Stromwandlern, erfasst werden. Im Ausführungsbeispiel nach Fig. 2 ist ein Sensor 14 zur Messung des Ausgangswechselstroms I_{AC} und je ein Sensor 15 zur Messung der Teil-Ausgangsströme I_{A1}, I_{A2} angeordnet. Aufgrund der Knotenregel des 1. Kirchhoffschen Gesetzes ist es nicht unbedingt erforderlich die Teil-Ausgangsströme I_{A1}, I_{A2} jedes AC-Leistungsteils 6 und den Ausgangswechselstrom I_{AC} zu erfassen, da sich einer der Ströme I_{A1}, I_{A2} oder I_{AC}, bei Messung aller restlichen Ströme, auch berechnen lässt. Die maximale Höhe der einzelnen Teil-Ausgangsströme I_{A1}, I_{A2} der parallelen AC-Leistungsteile 6 zum Zeitpunkt des Nulldurchgangs des Ausgangswechselstroms I_{AC} stellt ein Maß für die aktuelle Unsymmetrie dar, wodurch das tatsächliche Vorliegen einer Unsymmetrie erfassbar wird. Dementsprechend wird das Verfahren nur bei Überschreiten eines definierten Teil-Ausgangsstroms I_{A1}, I_{A2} eines der parallelen AC-Leistungsteile 6 beim Nulldurchgang des Ausgangswechselstroms I_{AC} durchgeführt und die Halbleiterschalter 7 der parallelen AC-Leistungsteile 6 über die vorgegebene Zeitspanne t_{F} gesperrt. Fig. 6 zeigt die Teil-Ausgangsströme I_{A1}, I_{A2} der parallelen AC-Leistungsteile 6 sowie den als Schwellwert I_{S} definierten Teil-Ausgangsstrom I_{A1}, I_{A2}, bei dessen Überschreiten das erfindungsgemäße Verfahren durchgeführt wird. Dabei ist ersichtlich, dass es der Schwellwert I_{S} einen Betrag darstellt und sowohl bei positiven Überschreiten als auch bei negativem Unterschreiten das Verfahren durchgeführt wird. Da die aktuelle Unsymmetrie im Nulldurchgang des Ausgangswechselstroms I_{AC} zum Zeitpunkt t_{M} erfasst wird, wird das Verfahren zur Symmetrierung der Teil-Ausgangsströme I_{A1}, I_{A2} wie in Fig. 6 dargestellt vor dem nächstfolgenden Nulldurchgang des Ausgangswechselstroms I_{AC} zum Zeitpunkt t_{S} durchgeführt. Eine nicht näher dargestellte Variante, bei der das Verfahren direkt anschließend an den Nulldurchgang des Ausgangswechselstroms I_{AC} zum Zeitpunkt t_{M} durchgeführt wird, wäre ebenso anwendbar.

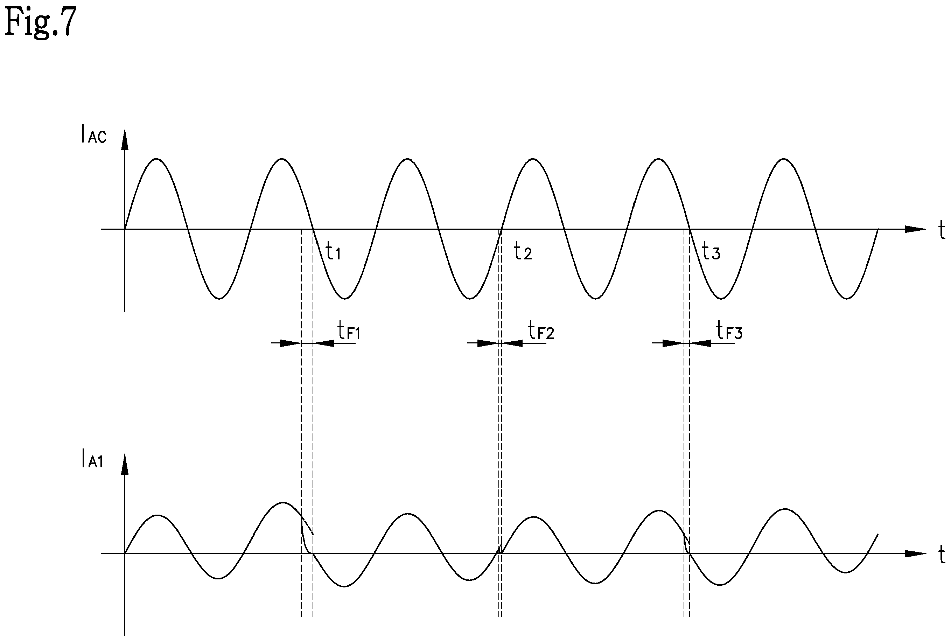

Fig. 7 zeigt beispielhaft wie die vorgegebene Zeitspanne t_{F} abhängig vom größten Teil-Ausgangsstrom I_{A1}, I_{A2} der parallelen AC-Leistungsteile 6 beim Nulldurchgang des Ausgangswechselstroms I_{AC} gewählt wird. Dabei ist vereinfachend nur einer der Teil-Ausgangsstrom I_{A1} dargestellt. In diesem Ausführungsbeispiel wird die Stromsymmetrierung jede 3. Halbwelle durchgeführt. Abhängig von der Größe des Teil-Ausgangsstroms I_{A1} beim Nulldurchgang des Ausgangswechselstroms I_{AC} wird die vorgegebene Zeitspanne t_{F} so gewählt, dass der Teil-Ausgangsstrom I_{A1} innerhalb der vorgegebenen Zeitspanne t_{F} auf Null abklingt. Dementsprechend ist t_{F1} größer als t_{F3} das wiederum größer als t_{F2} ist. Die Anwendungsdauer des Verfahrens kann so auf die minimal notwendige Zeit verkürzt werden, wodurch Störungen im Signalverlauf der Wechselspannung U_{AC} am Wechselspannungsausgang 10 des Wechselrichters 1 reduziert werden. Dabei kann die Beurteilung der Größe der Teil-Ausgangsströme I_{A1}, I_{A2} beim Nulldurchgang des Ausgangswechselstroms I_{AC} eine Halbwelle vor der eigentlichen Symmetrierung erfolgen oder der Stromverlauf der Teil-Ausgangsströme I_{A1}, I_{A2} wird vorausberechnet, wie durch die gestrichelten Linien des Stromverlaufs des Teil-Ausgangsstroms I_{A1} in Fig. 7 angedeutet.

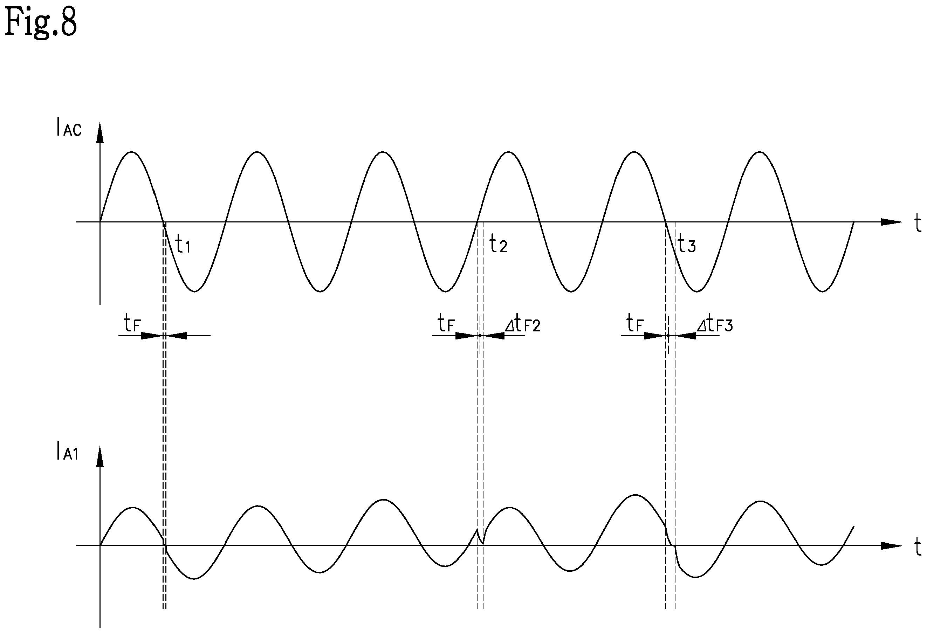

Fig 8. zeigt eine andere beispielhafte Anwendung des Verfahrens, bei der auch die Anzahl der Nulldurchgänge zwischen den Anwendungen des Verfahrens variiert wird. Außerdem ist aus Fig. 8 die Anwendung des Verfahrens unmittelbar nach dem Nulldurchgang ersichtlich. Des Weiteren wird hier eine stochastische Variation der vorgegebenen Zeitspanne t_{F} angewendet. So wird zum Zeitpunkt t₁ das Verfahren für die vorgegebene Zeitspanne t_{F} angewendet. Zu den Zeitpunkten t₂ und t₃ hingegen wird die vorgegebene Zeitspanne t_{F} um Δt_{F2} bzw. Δt_{F3} vergrößert. Zum Zeitpunkt t₂ ist zudem erkennbar, dass ein Abklingen des Teil-Ausgangsstroms I_{A1} auf Null nicht unbedingt erforderlich ist, da auch schon ein teilweises Abklingen des Teil-Ausgangsstroms I_{A1} eine Verbesserung in der Stromsymmetrierung mit sich bringt. Sinnvollerweise ist für die stochastische Variation der Zeitspanne t_{F} eine Obergrenze Δt_{F} vorgegeben. Diese stochastische Variation der Zeitspanne t_{F} kann zur Reduzierung von Störungen im Signalverlauf der Wechselspannung U_{AC} am Wechselspannungsausgang 10 des Wechselrichters 1 beitragen.

Besonders einfach ist das Verfahren umzusetzen, indem die vorgegebene Zeitspanne t_{F} als eine Periode der Schaltfrequenz f_{S} gewählt wird.

Es wird darauf hingewiesen, dass die dargestellten zeitlichen Verläufe idealisiert sind und keine unter realen Bedingungen auftretenden Störungen enthalten. Insbesondere wird für den Ausgangswechselstrom I_{AC} ein idealisierter Verlauf angenommen.

## Patentansprüche

1. Verfahren zum Betreiben eines Wechselrichters (1) zur Umwandlung einer Gleichspannung (U_{DC}) in eine Wechselspannung (U_{AC}) mit einer vorgegebenen Netzfrequenz (f_{AC}) zur Versorgung von Verbrauchern (12) und/oder Einspeisung in ein Versorgungsnetz (13), wobei die Gleichspannung (U_{DC}) über einen Gleichspannungseingang (2) des Wechselrichters (1) mehreren parallel geschalteten AC-Leistungsteilen (6) des Wechselrichters (1) mit Halbleiterschaltern (7) in Brückenschaltung und parallel dazu angeordneten Freilaufdioden (8) zugeführt wird, und die Teil-Ausgangsströme (I_{Ai}) der einzelnen AC-Leistungsteile (6) über jeweils eine Induktivität (9) einem Wechselspannungsausgang (10) in Form eines Ausgangswechselstromes (I_{AC}) zugeführt werden, **dadurch gekennzeichnet, dass** die Halbleiterschalter (7) der parallel geschalteten AC-Leistungsteile (6) über eine gemeinsame Steuereinrichtung (11) synchron mit einer Schaltfrequenz (f_{S}) angesteuert werden, und die Halbleiterschalter (7) der AC-Leistungsteile (6) bei einzelnen Nulldurchgängen des Ausgangswechselstromes (I_{AC}) über eine vorgegebene Zeitspanne (t_{F}) gesperrt werden, sodass die Induktivitäten (9) über die Freilaufdioden (8) der Halbleiterschalter (7) entladen und dadurch die Teil-Ausgangsströme (I_{Ai}) der parallelen AC-Leistungsteile (6) auf Null abklingen und symmetriert werden.

2. Verfahren nach Anspruch 1, **dadurch gekennzeichnet, dass** die Halbleiterschalter (7) der AC-Leistungsteile (6) während jedes n-ten Nulldurchgangs des Ausgangswechselstromes (I_{AC}) über die vorgegebene Zeitspanne (t_{F}) gesperrt werden, wobei n eine ungerade ganzzahlige Zahl, insbesondere eine Primzahl, kleiner 500 ist.

3. Verfahren nach Anspruch 1 oder 2, **dadurch gekennzeichnet, dass** der Teil-Ausgangsstrom (I_{Ai}) jedes AC-Leistungsteils (6) und der Ausgangswechselstrom (I_{AC}) erfasst wird und bei Überschreiten eines definierten Teil-Ausgangsstroms (I_{Ai}) eines der parallelen AC-Leistungsteile (6) beim Nulldurchgang des Ausgangswechselstroms (I_{AC}) die Halbleiterschalter (7) der parallelen AC-Leistungsteile (6) über die vorgegebene Zeitspanne (t_{F}) gesperrt werden.

4. Verfahren nach einem der Ansprüche 1 bis 3, **dadurch gekennzeichnet, dass** der Teil-Ausgangsstrom (I_{Ai}) jedes AC-Leistungsteils (6) und der Ausgangswechselstrom (I_{AC}) erfasst wird und die vorgegebene Zeitspanne (t_{F}) abhängig vom größten Teil-Ausgangsstrom (I_{Ai}) der parallelen AC-Leistungsteile (6) beim Nulldurchgang des Ausgangswechselstroms (I_{AC}) gewählt wird.

5. Verfahren nach einem der Ansprüche 1 bis 4, **dadurch gekennzeichnet, dass** die vorgegebene Zeitspanne (t_{F}) innerhalb vorgegebener Grenzen (Δt_{F}) vorzugsweise stochastisch variiert wird.

6. Verfahren nach einem der Ansprüche 1 bis 5, **dadurch gekennzeichnet, dass** die vorgegebene Zeitspanne (t_{F}) als eine Periode der Schaltfrequenz (f_{S}) gewählt wird.

7. Wechselrichter (1) zur Umwandlung einer Gleichspannung (U_{DC}) in eine Wechselspannung (U_{AC}) mit einer vorgegebenen Netzfrequenz (f_{AC}) zur Versorgung von Verbrauchern (12) und/oder Einspeisung in ein Versorgungsnetz (13), mit einem Gleichspannungseingang (2) und mehreren parallel geschalteten AC-Leistungsteilen (6) mit Halbleiterschaltern (7) in Brückenschaltung und parallelen dazu angeordneten Freilaufdioden (8), wobei die Ausgänge der AC-Leistungsteile (6) über jeweils eine Induktivität (9) mit einem Wechselspannungsausgang (10) verbunden sind, und die Teil-Ausgangsströme (I_{Ai}) der einzelnen AC-Leistungsteile (6) über die jeweilige Induktivität (9) dem Wechselspannungsausgang (10) in Form eines Ausgangswechselstromes (I_{AC}) zugeführt werden, **dadurch gekennzeichnet, dass** eine gemeinsame Steuereinrichtung (11) zur synchronen Steuerung der Halbleiterschalter (7) der parallel geschalteten AC-Leistungsteile (6) mit einer Schaltfrequenz (f_{S}) vorgesehen ist, welche Steuereinrichtung (11) dazu ausgebildet ist, die Halbleiterschalter (7) der AC-Leistungsteile (6) während einzelner Nulldurchgänge des Ausgangswechselstromes (I_{AC}) über eine vorgegebene Zeitspanne (t_{F}) zu sperren, sodass die Induktivitäten (9) über die Freilaufdioden (8) der Halbleiterschalter (7) entladbar und dadurch die Teil-Ausgangsströme (I_{Ai}) der parallelen AC-Leistungsteile (6) auf Null abklingbar und symmetrierbar sind.

8. Wechselrichter (1) nach Anspruch 7, **dadurch gekennzeichnet, dass** die Steuereinrichtung (11) dazu ausgebildet ist, die Halbleiterschalter (7) der parallelen AC-Leistungsteile (6) während jedes n-ten Nulldurchgangs des Ausgangswechselstromes (I_{AC}) über die vorgegebene Zeitspanne (t_{F}) zu sperren, wobei n eine ungerade ganzzahlige Zahl, insbesondere eine Primzahl, kleiner 500 ist.

9. Wechselrichter (1) nach Anspruch 7 oder 8, **dadurch gekennzeichnet, dass** an jedem AC-Leistungsteil (6) ein Sensor (15) zur Messung des Teil-Ausgangsstromes (I_{Ai}) des AC-Leistungsteils (6) angeordnet und mit der Steuereinrichtung (11) verbunden ist.

10. Wechselrichter (1) nach einem der Ansprüche 7 bis 9, **dadurch gekennzeichnet, dass** die Steuereinrichtung (11) zur vorzugsweise stochastischen Variation der vorgegebenen Zeitspanne (t_{F}) innerhalb vorgegebener Grenzen (Δt_{F}) ausgebildet ist.

11. Wechselrichter (1) nach einem der Ansprüche 7 bis 10, **dadurch gekennzeichnet, dass** die vorgegebene Zeitspanne (t_{F}) eine Periode der Schaltfrequenz (f_{S}) beträgt.

12. Wechselrichter (1) nach einem der Ansprüche 7 bis 11, **dadurch gekennzeichnet, dass** die AC-Leistungsteile (6) durch Halbbrücken mit jeweils zumindest zwei Halbleiterschaltern (7), vorzugsweise IGBTs mit integrierten Freilaufdioden (8), gebildet sind.

13. Wechselrichter (1) nach einem der Ansprüche 7 bis 11, **dadurch gekennzeichnet, dass** die AC-Leistungsteile (6) durch Vollbrücken mit jeweils zumindest vier Halbleiterschaltern (7), vorzugsweise IGBTs mit integrierten Freilaufdioden (8), gebildet sind.

14. Wechselrichter (1) nach einem der Ansprüche 7 bis 13, **dadurch gekennzeichnet, dass** die Steuereinrichtung (11) einen Pulsweitenmodulator aufweist.

## Claims

1. Method for operating an inverter (1) for converting a direct voltage (U_{DC}) into an alternating voltage (U_{AC}) having a predetermined network frequency (f_{AC}) for supplying electrical loads (12) and/or feeding into a supply network (13), the direct voltage (U_{DC}) being fed via a direct voltage input (2) of the inverter (1) to a plurality of AC power units (6) of the inverter (1) which are connected in parallel and have semiconductor switches (7) in a bridge circuit and freewheeling diodes (8) arranged in parallel therewith, and the sub-output currents (I_{Ai}) of the individual AC power units (6) being fed via a relevant inductor (9) to an alternating voltage output (10) in the form of an alternating output current (I_{AC}), **characterised in that** the semiconductor switches (7) of the AC power units (6) which are connected in parallel can be controlled synchronously with a switching frequency (f_{S}) by means of a common control device (11), and the semiconductor switches (7) of the AC power units (6) are blocked during individual zero crossings of the alternating output current (I_{AC}) over a predetermined time period (t_{F}) such that the inductors (9) discharge via the freewheeling diodes (8) of the semiconductor switches (7) and the sub-output currents (I_{Ai}) of the parallel AC power units (6) thus decay to zero and are balanced.

2. Method according to claim 1, **characterised in that** the semiconductor switches (7) of the AC power units (6) are blocked during every n^{th} zero crossing of the alternating output current (I_{AC}) over the predetermined time period (t_{F}), n being an odd integer number, in particular a prime number, less than 500.

3. Method according to either claim 1 or claim 2, **characterised in that** the sub-output current (I_{Ai}) of each AC power unit (6) and the alternating output current (I_{AC}) is detected and, when a defined sub-output current (I_{Ai}) of one of the parallel AC power units (6) is exceeded during the zero crossing of the alternating output current (I_{AC}), the semiconductor switches (7) of the parallel AC power units (6) are blocked over the predetermined time period (t_{F}).

4. Method according to any of claims 1 to 3, **characterised in that** the sub-output current (I_{Ai}) of each AC power unit (6) and the alternating output current (I_{AC}) is detected and the predetermined time period (t_{F}) is selected depending on the largest sub-output current (I_{Ai}) of the parallel AC power units (6) during the zero crossing of the alternating output current (I_{AC}).

5. Method according to any of claims 1 to 4, **characterised in that** the predetermined time period (t_{F}) is varied, preferably stochastically, within predetermined limits (Δt_{F}).

6. Method according to any of claims 1 to 5, **characterised in that** the predetermined time period (t_{F}) is selected as one period of the switching frequency (f_{S}).

7. Inverter (1) for converting a direct voltage (U_{DC}) into an alternating voltage (U_{AC}) having a predetermined network frequency (f_{AC}) for supplying electrical loads (12) and/or feeding into a supply network (13), comprising a direct voltage input (2) and a plurality of AC power units (6) which are connected in parallel and have semiconductor switches (7) in a bridge circuit and freewheeling diodes (8) arranged in parallel therewith, the outputs of the AC power units (6) being connected to an alternating voltage output (10) by means of a relevant inductor (9), and the sub-output currents (I_{Ai}) of the individual AC power units (6) being fed to the alternating voltage output (10) in the form of an alternating output current (I_{AC}) by means of the relevant inductor (9), **characterised in that** a common control device (11) is provided for controlling the semiconductor switches (7) of the AC power units (6) which are connected in parallel synchronously with a switching frequency (f_{S}), which control device (11) is designed to block the semiconductor switches (7) of the AC power units (6) during individual zero crossings of the alternating output current (I_{AC}) over a predetermined time period (t_{F}) such that the inductors (9) can be discharged via the freewheeling diodes (8) of the semiconductor switches (7) and the sub-output currents (I_{Ai}) of the parallel AC power units (6) can thus be decayed to zero and can be balanced.

8. Inverter (1) according to claim 7, **characterised in that** the control device (11) is designed to block the semiconductor switches (7) of the parallel AC power units (6) during every n^{th} zero crossing of the alternating output current (I_{AC}) over the predetermined time period (t_{F}), n being an odd integer number, in particular a prime number, less than 500.

9. Inverter (1) according to either claim 7 or claim 8, **characterised in that** a sensor (15) for measuring the sub-output current (I_{Ai}) of the AC power unit (6) is arranged at each AC power unit (6) and is connected to the control device (11).

10. Inverter (1) according to any of claims 7 to 9, **characterised in that** the control device (11) is designed to preferably stochastically vary the predetermined time period (t_{F}) within predetermined limits (Δt_{F}).

11. Inverter (1) according to any of claims 7 to 10, **characterised in that** the predetermined time period (t_{F}) is one period of the switching frequency (f_{S}).

12. Inverter (1) according to any of claims 7 to 11, **characterised in that** the AC power units (6) are formed by half bridges each having at least two semiconductor switches (7), preferably IGBTs having integrated freewheeling diodes (8).

13. Inverter (1) according to any of claims 7 to 11, **characterised in that** the AC power units (6) are formed by full bridges each having at least four semiconductor switches (7), preferably IGBTs having integrated freewheeling diodes (8).

14. Inverter (1) according to any of claims 7 to 13, **characterised in that** the control device (11) has a pulse width modulator.

## Revendications

1. Procédé de fonctionnement d'un onduleur (1) destiné à convertir une tension continue (U_{DC}) en une tension alternative (U_{AC}) avec une fréquence de réseau (f_{AC}) prédéfinie destinée à alimenter des consommateurs (12) et/ou à être injectée dans un réseau d'alimentation (13), la tension continue (U_{DC}) étant, par le biais d'une entrée de tension continue (2) de l'onduleur (1), conduite à plusieurs parties de puissance CA (6) de l'onduleur (1) montées en parallèle, avec des commutateurs à semi-conducteurs (7) à montage en pont et des diodes de roue libre (8) disposées parallèlement à ceux-ci, et les courants de sortie partiels (I_{Ai}) des différentes parties de puissance CA (6) étant, par le biais respectivement d'une inductance (9), conduits à une sortie de tension alternative (10) sous la forme d'un courant alternatif de sortie (I_{AC}),
**caractérisé en ce que** les commutateurs à semi-conducteurs (7) des parties de puissance CA (6) montées en parallèle sont pilotés par le biais d'un dispositif de commande (11) commun de façon synchrone avec une fréquence de commutation (fₛ), et les commutateurs à semi-conducteurs (7) des parties de puissance CA (6) sont, lors de différents passages par zéro du courant alternatif de sortie (I_{AC}), bloqués pendant une durée (t_{F}) prédéfinie de telle sorte que les inductances (9) sont déchargées par le biais des diodes de roue libre (8) des commutateurs à semi-conducteurs (7) et que de ce fait les courants de sortie partiels (I_{Ai}) des parties de puissance CA (6) parallèles décroissent vers zéro et deviennent symétriques.

2. Procédé selon la revendication 1, **caractérisé en ce que** les commutateurs à semi-conducteurs (7) des parties de puissance CA (6) sont, pendant chaque n^{ième} passage par zéro du courant alternatif de sortie (I_{AC}), bloqués pendant la durée (t_{F}) prédéfinie, n étant un nombre entier impair, en particulier un nombre premier, inférieur à 500.

3. Procédé selon la revendication 1 ou 2, **caractérisé en ce que** le courant de sortie partiel (I_{Ai}) de chaque partie de puissance CA (6) et le courant alternatif de sortie (I_{AC}) sont détectés et, en cas de dépassement d'un courant de sortie partiel (I_{Ai}) défini de l'une des parties de puissance CA (6) parallèles lors du passage par zéro du courant alternatif de sortie (I_{AC}), les commutateurs à semi-conducteurs (7) des parties de puissance CA (6) parallèles sont bloqués pendant la durée (t_{F}) prédéfinie.

4. Procédé selon l'une des revendications 1 à 3, **caractérisé en ce que** le courant de sortie partiel (I_{Ai}) de chaque partie de puissance CA (6) et le courant alternatif de sortie (I_{AC}) sont détectés, et la durée (t_{F}) prédéfinie est choisie en fonction du courant de sortie partiel (I_{Ai}) le plus grand des parties de puissance CA (6) parallèles lors du passage par zéro du courant alternatif de sortie (I_{AC}).

5. Procédé selon l'une des revendications 1 à 4, **caractérisé en ce que** la durée (t_{F}) prédéfinie est modifiée, de préférence de façon stochastique, à l'intérieur de limites (Δt_{F}) prédéfinies.

6. Procédé selon l'une des revendications 1 à 5, **caractérisé en ce que** la durée (t_{F}) prédéfinie est choisie en tant que période d'une fréquence de commutation (fₛ).

7. Onduleur (1) destiné à convertir une tension continue (U_{DC}) en une tension alternative (U_{AC}) avec une fréquence de réseau (f_{AC}) prédéfinie destinée à alimenter des consommateurs (12) et/ou à être injectée dans un réseau d'alimentation (13), avec une entrée de tension continue (2) et plusieurs parties de puissance CA (6) montées en parallèle, avec des commutateurs à semi-conducteurs (7) à montage en pont et des diodes de roue libre (8) disposées parallèlement à ceux-ci, les sorties des parties de puissance CA (6) étant, par le biais respectivement d'une inductance (9), raccordées à une sortie de tension alternative (10), et les courants de sortie partiels (I_{Ai}) des différentes parties de puissance CA (6) étant, par le biais de l'inductance (9) respective, conduits à la sortie de tension alternative (10) sous la forme d'un courant alternatif de sortie (I_{AC}),
**caractérisé en ce que**, pour la commande synchrone des commutateurs à semi-conducteurs (7) des parties de puissance CA (6) montées en parallèle, avec une fréquence de commutation (fₛ), il est prévu un dispositif de commande (11) commun, lequel dispositif de commande (11) est constitué pour bloquer pendant une durée (t_{F}) prédéfinie les commutateurs à semi-conducteurs (7) des parties de puissance CA (6) lors de différents passages par zéro du courant alternatif de sortie (I_{AC}) de telle sorte que les inductances (9) peuvent être déchargées par le biais des diodes de roue libre (8) des commutateurs à semi-conducteurs (7) et que de ce fait les courants de sortie partiels (I_{Ai}) des parties de puissance CA (6) parallèles peuvent décroître vers zéro et devenir symétriques.

8. Onduleur (1) selon la revendication 7, **caractérisé en ce que** le dispositif de commande (11) est constitué pour bloquer les commutateurs à semi-conducteurs (7) des parties de puissance CA (6) parallèles lors de chaque n^{ième} passage par zéro du courant alternatif de sortie (I_{AC}) pendant la durée (t_{F}) prédéfinie, n étant un nombre entier impair, en particulier un nombre premier, inférieur à 500.

9. Onduleur (1) selon la revendication 7 ou 8, **caractérisé en ce que**, sur chaque partie de puissance CA (6), il est disposé un capteur (15) qui est destiné à mesurer le courant de sortie partiel (I_{Ai}) de la partie de puissance CA (6) et qui est raccordé au dispositif de commande (11).

10. Onduleur (1) selon l'une des revendications 7 à 9, **caractérisé en ce que** le dispositif de commande (11) est constitué pour faire varier la durée (t_{F}) prédéfinie, de préférence de façon stochastique, à l'intérieur de limites (Δt_{F}) prédéfinies.

11. Onduleur (1) selon l'une des revendications 7 à 10, **caractérisé en ce que** la durée (t_{F}) prédéfinie est égale à une période de la fréquence de commutation (fₛ).

12. Onduleur (1) selon l'une des revendications 7 à 11, **caractérisé en ce que** les parties de puissance CA (6) sont formées par des demi-ponts avec respectivement au moins deux commutateurs à semi-conducteurs (7), de préférence des IGBT avec diodes de roue libre (8) intégrées.

13. Onduleur (1) selon l'une des revendications 7 à 11, **caractérisé en ce que** les parties de puissance CA (6) sont formées par des ponts complets avec respectivement au moins quatre commutateurs à semi-conducteurs (7), de préférence des IGBT avec diodes de roue libre (8) intégrées.

14. Onduleur (1) selon l'une des revendications 7 à 13, **caractérisé en ce que** le dispositif de commande (11) comporte un modulateur de largeur d'impulsion.
